(19) **Europäisches Patentamt** / **European Patent Office** / **Office européen des brevets**

(11) **EP 3 422 693 A1**

(12) **EUROPEAN PATENT APPLICATION**

(43) Date of publication:
02.01.2019 Bulletin 2019/01

(51) Int Cl.:
*H04N 5/225* (2006.01)  *H04N 5/232* (2006.01)
*G03B 17/02* (2006.01)  *H04N 5/247* (2006.01)

(21) Application number: 17178879.7

(22) Date of filing: 29.06.2017

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **H4 Engineering, Inc.**
**San Antonio, TX 78217 (US)**

(72) Inventors:
• **SAMMONS, Alexander**
**San Antonio, TX Texas 78247 (US)**
• **BOYLE, Christopher T.**
**San Antonio, TX Texas 78251 (US)**
• **TAYLOR, Scott K.**
**San Antonio, TX Texas 78217 (US)**
• **GLOVER, Gordon Jason**
**Corpus Cristi, TX Texas 78404 (US)**

(74) Representative: **Dickerson, David**
**Gartenstrasse 51**
**85354 Freising (DE)**

(54) **APPLICATION DEPENDENT VIDEO RECORDING DEVICE ARCHITECTURE**

(57) The video recording systems disclosed herein comprise recording devices built in a variety of system architectures depending on the type of intended use. The guiding principle of the system architectures is that an optimal recording device will have optics, sensor, control electronics, and communication capability designed for the purpose of use. User controls, as well as power sources may be separated from the optimal recording device. Different applications may demand a variety of accessories including camera mounts, automatic camera orientation capabilities, remote control devices, and remote power sources, all of which may be designed as use-specific devices and optimized for the purpose of use.

FIG. 2

## Description

BACKGROUND

Recording a person participating in an activity is an important task. A surfer may wish to capture his or her surfing experience for later enjoyment or to improve his or her surfing technique. A father may wish to record his son's winning touchdown in a football game. A mother may wish to capture her daughter's record-breaking gymnastics performance. In these examples, the alternative to hiring an expensive cameraman or accepting amateur recordings, the proven solution is to use automatic or robotic cameras that are moved by an appropriate mechanism to keep the user in the video frame. An alternative to recording activities from a spectator's vantage point is using point of view (POV) action cameras to record the experience of the person engaged in the activity. In this case, the camera is typically attached to the person engaged in the activity or to an accessory used in the activity, like a skateboard, for example. In both cases it is desirable to provide cameras that can fulfill the task of recording and auxiliary equipment (like tripods, camera mounts, and the like) to aid the cameras and users to obtain the best possible footage. A lot of effort has been directed toward achieving these goals but a major problem remains in that the cameras and the accessories still lack the flexibility to provide the users with hardware suitable for the widest variety of conceivable filming circumstances.

SUMMMARY

For an automated cameraman and for point-of-view ("POV") cameras, the architecture of the recording apparatus is provided to give a user the best performance under a large variety of specific conditions that are characteristic of specific recording objectives and activity types. Such specific conditions include, for example, whether the recording apparatus is part of a system comprising a multiplicity of similar apparatuses; whether the automated cameraman is operated in a cooperative tracking mode, and, if so, what kind of signal is received from the remote unit associated with the subject of recording; whether the subject is the operator of the recording system, and, if so, whether it is feasible that human controls are at the subject's disposal at all times; whether a POV camera is attached to the person involved in the activity or to a sporting device used in the activity; etc.

A digital camera as a recording device comprises optics to project images on a sensor that converts the images into electronic information, storage devices to store at least some of the information, means to process information, means to transmit the electronic information corresponding to captured images to devices that enable viewing the images, device controls, a power source, and user interfaces. The control device is like a CPU or central processing unit including peripheries and firmware, excluding a user interface (*i.e.*, like a computer without a keyboard, mouse, and screen, but having the interfaces to control other hardware (*e.g.*, a camera, positioner) and to communicate with the outside world (via the Internet or "cloud", for example)).

In the case of automated video recording there are additional system elements provided, such as a pan/tilt positioner for orienting the camera, a tripod or similar device to hold the camera, and a control device (which may also be referred to as a base station) that controls the positioner. Further, the control device may also be used for communicating with the user and with the outside world (*e.g.*, via a network such as the Internet). In the case of POV cameras additional system elements comprise means to fasten the camera to the user's body or equipment. There may be additional elements that help to control the camera or help to connect the camera to the outside world (*e.g.*, via a network such as the Internet).

The present disclosure describes unconventional system architectures that can be thought of as a modular architecture that, for example, may integrate some elements of the recording systems with other system elements and separate some elements from other elements of the recording system according to the needs presented by specific applications and uses of both automated cameraman and POV recording systems.

If the capturing device in the recording system may be a modern digital camera, it comprises user interfaces for control and electrical batteries to provide operational power. However, the capturing device may be separated from the user control interfaces and from the power source if it is advantageous to place those at a location where the controls are more accessible for the user and/or where the weight of the batteries does not interfere with the activity to be recorded.

If the capturing device is an automated recording system (also referred to herein as an automated cameraman) comprising one or more digital cameras, the cameras and their controls may be integrated with positioners that orient each camera. Further, the camera or cameras may be integrated with a control unit (also called base station). If the system comprises a remote device or devices associated with the subject or subjects of the recording, these may incorporate system and camera controls.

BRIEF DESCRIPTION OF THE DRAWINGS

FIG. 1      shows a schematic diagram of the major components of a conventional digital camera.

FIG. 2      shows a schematic diagram of the major components of a first implementation of the image capturing system of the present disclosure.

FIG. 3      shows a schematic diagram of the major components of a second implementation of the image capturing system of the present disclosure.

FIG. 4 shows a schematic diagram of the major components of a third implementation of the inventive image capturing system.

FIG. 5 shows a schematic diagram illustrating an implementation of an automatic video recording system.

FIG. 6 shows a block diagram illustrating an "all in one" implementation of an automatic video recording system.

FIG. 7 shows a block diagram illustrating another implementation of an automatic video recording system.

FIG. 8 shows a block diagram illustrating a third implementation of an automatic video recording system.

FIG. 9 shows a block diagram illustrating a fourth implementation of an automatic video recording system.

FIG. 10 shows a block diagram illustrating a fifth implementation of an automatic video recording system.

FIG. 11 shows a schematic diagram illustrating the main components of a remote device equipped with a microphone and speaker according to an implementation of the present disclosure.

FIG. 12 shows a schematic diagram illustrating the angular relationship of various components of an automatic video recording system.

FIG. 13 is a schematic drawing of the geometric relationships pertinent to zoom angle calculation.

FIG. 14 shows a flowchart illustrating a method of operating an automatic video recording system with zoom and focus control according to an implementation of the present disclosure.

FIG. 15 shows a schematic diagram of yet another implementation of the present disclosure.

FIG. 16 shows a schematic diagram of the major components of another implementation of the inventive image capturing system.

FIG. 17 shows a schematic diagram of the major components of still another implementation of the inventive image capturing system.

DETAILED DESCRIPTION

Systems and methods of obtaining and utilizing location data for controlling a camera to track a subject have been described in co-owned U.S. Patent No. 8,704,904, titled "Portable High Quality Automated Video Recording System", issued April 22, 2014, and co-owned and co-pending U.S. Nonprovisional Patent Application No. 13/726,222, titled "System and Method for Initial Setup of an Automatic Recording System", filed December 24, 2012; U.S. Patent Application No. 13/726,355, titled "Automatic Orientation of a Pointing Device Using a Single Global Positioning Unit", filed December 24, 2012; U.S. Nonprovisional Patent Application No. 13/726,451, titled "Feedback and Manual Remote Control System and Method for Automatic Video Recording", filed December 24, 2012; U.S. Patent Application No. 13/726,380, titled "A Portable System for Automated Video Recording", filed December 24, 2012; and U.S. Patent Application No. 14/223,803 titled "Portable High Quality Automated Video Recording System", filed march 24, 2014 (referred to herein as the "'803 Application"); the contents of all of which are hereby incorporated by reference herein in their entirety.

The present disclosure relates to video recording systems for recording activities, such as, for example, sports, recreation, or adventures. Some of these systems are automated and track the movements of one or more subjects (or targets) and record the activity without the aid of a cameraman. The location information needed for the orientation of a camera may be determined by a variety of methods that may be used individually or in various combinations; such methods will be collectively referred to herein as location determination technology (LDT). According to the present disclosure, camera orientations (and in some cases also additional camera movements) and camera settings are based on target size data and movement data regarding the camera and the filmed target. Movement data comprise location data supplemented by the time derivatives of location data (e.g., the target's velocity and acceleration). Also, the knowledge that location data are missing or are insufficiently well defined is treated as additional data. Other recording devices may be attached to or carried by the subject or may be attached to or carried by accessories that are related to the subject's activity. Such accessories may be wearable (e.g., helmets or armbands) or may be personal equipment (e.g., skateboards or skis), but may also be vehicles that are used or controlled by the user engaged in the activity.

One problem solved relates to the limitations caused by designing cameras as all-purpose, stand-alone devices. Whether it is a camera for a drone, an action camera, a robot camera, a handheld camera, or a stationary wide-angle camera, each camera's power, user interface, and mounting requirements are dictated by the purpose of use or the type of activity and by the desired video quality. Cameras and camera accessories currently on the market do not take into account the fact that all of the design requirements, including user interface requirements and power requirements, are dictated by a very wide variety of applications and activities for which cameras are used.

A product like an action camera is designed to have a specific battery, specific user interface, lens size, sensor size, etc. Such an action camera is limited to certain activities because of these specifications, and most particularly by the size of the camera. If such an action camera is optimized for a particular application, it will be suboptimal for other applications. Consider, for example, a camera mounted on a helmet. With reference to the present disclosure, the action camera would be much better for many activities if such cameras were designed so that only the lens system, the image sensor, the digital signal processor (DSP), and the Wi-Fi antenna were included in the camera (or camera module) that is on the helmet, with the battery and user interface located elsewhere, for example on a body mount or jacket pocket. With such a design, one could increase the size/capacity of the battery (increasing useful recording time) and situate camera controls conveniently. Instead of a user interface that is presently on the camera and, therefore, on top of the helmet, the user interface could be situated on the clothing of the user, for example. Likewise, audio microphones and screens for picture preview and playback could be mounted conveniently.

In the foregoing example, the mounting accessory was a helmet but action cameras are often used in conjunction with accessories that are considerably larger than the camera itself or even larger than a helmet. Examples of such accessories include poles, water skis, and other sporting equipment, to name a few. Action cameras typically have poor battery life. For example, a popular action camera has a battery life of 1.5 hours with the Wi-Fi feature turned off. Action cameras are best used in an always ready position and where a remote screen is used to view what the action camera is capturing. Even though these presently available cameras are lightweight (some weigh only three to four ounces without their waterproof housing), they could be lighter with the battery removed and placed in an accessory. Even more importantly, larger capacity batteries could be used resulting in extended battery life. The accessory mount, by its attachment mode (*i.e.*, where it attaches and how) may define the acceptable maximum battery size/capacity and therefore it may determine how much power is available to the camera. For instance, a tripod can support a much larger battery than a helmet can. A chest mount could have a power supply supported by the straps that mount the camera to the chest instead of being artificially limited to a small battery inside the camera. Such chest mount could support a camera with a gimbal stabilizer capable of recording high quality video even as the user moves. This inventive architecture would also allow mounting devices such as additional radios that may not be needed for all uses but that may be needed for specific applications.

Actions are often filmed using automatic cooperative tracking wherein a base station is communicatively coupled with a remote device and is configured to receive information about the location of the remote device. The base station controls a positioner to orient a camera based at least in part on interaction with the remote device. A problem with such devices is that while it is desirable that they enable camera control, there are a large variety of cameras in use wherein each has their unique and sometimes proprietary control access. Thus, it is not practical to provide automatic tracking system with camera controls for all types of cameras. It is advantageous to provide a system wherein the camera is an integral part of the tracking device. Implementations according to the present disclosure provide automatic tracking systems with a variety of integration levels or architectures. The present disclosure provides such a system wherein the base station controls the operation of the camera. And, the present disclosure provides automatic tracking systems wherein the positioner and the camera are unitarily integrated and the base station controls the positioner and the camera using wireless communication.

For automatic tracking systems, it may also be beneficial to move the controls and battery away from the camera itself. These systems are typically tripod based and tripods can accommodate batteries for all parts of the system (with the exception of the remote unit). The advantage is that removing these parts makes the camera lighter and hence more nimble. This may be very useful for filming fast-paced actions, like car races. Furthermore, controls can be separated from the camera making it even lighter and controls may be provided either as part of the base station or as part of a remote control device that is also used for automated cooperative tracking of the user who carries the remote device.

At least one intended application of the inventive systems of the present application is recording sporting events during which the remote device (together with the subject) may be exposed to harsh conditions, such as being temporarily submerged in water or hit against hard objects. Thus, one of the objectives of such systems is to make the remote device waterproof and shockproof. Further, since the remote device is located with the subject, recording of sound at the location of the subject is an important feature.

In the following discussion, there are two related but distinct concepts that are worth clarifying. First, some units or devices are described as separate, or as housed separately. These expressions are used as opposed to the word integrated and means that the units or devices may be physically connected but that the connection is temporary, *i.e.*, the units may be removed from each other without opening lids, doors, and the like. For example, a teleobjective lens of a camera would be a separate unit. Conversely, a battery placed inside a digital camera is not a separate unit even though it may be removed and replaced. A battery pack that is outside the digital camera is a separate unit. Second, during use, some units or devices may be co-located with a person, perhaps a subject or a user. The expression co-located is used herein to mean that the person who is co-located with a unit or device can reach the unit or device without substantially moving to a new location. For example, the user of an automatic recording system is co-located with a remote device used by such system during cooperative tracking but is not co-located with the camera of the same system, even if the camera is just a few yards away. A person would be co-located with the camera if the camera is within reach of the person.

One may think about the inventive devices hereof as an image capturing device comprising an imaging unit equipped with optics, at least one image sensor, at least one image processor, and at least one information storage device, and a separate but connectible mounting unit, a separate but connectible user control interface unit, and a separate but connectible power supply. The mounting unit may house either or both the user control interface unit and the power supply, or may house neither of these units. Some of the units may be spatially separated during use while they are also connected such as to provide support for the imaging unit, and to control and to supply power for the same. The user control interface unit is used to control the image capturing device.

Implementations of the inventive apparatus hereof may also be an automatic video recording system comprising a digital camera module, an orienting device, at least one power supply module, a control device module, and an interface device module, wherein the digital camera module receives power from a power supply module and is controlled by the control device module. The control device module also controls the orienting device and the orienting device orients the digital camera module. The user can input control commands to and receive information from the control module and from the digital camera module using the interface device module.

Another way to describe implementations of the present disclosure is that they provide a new method of enabling users to record videos of their (and other's) activities. The inventive method provides users with components designed to record a variety of activities so that they can select among the provided components. Provided are modular units that may be assembled in a variety of ways into an image capturing device. Each modular unit may have multiple variants by size, capacity, or by the way it performs its task, but the variants have common functions as modular units of the image capturing device. The modular units of the image capturing device may be, for example:

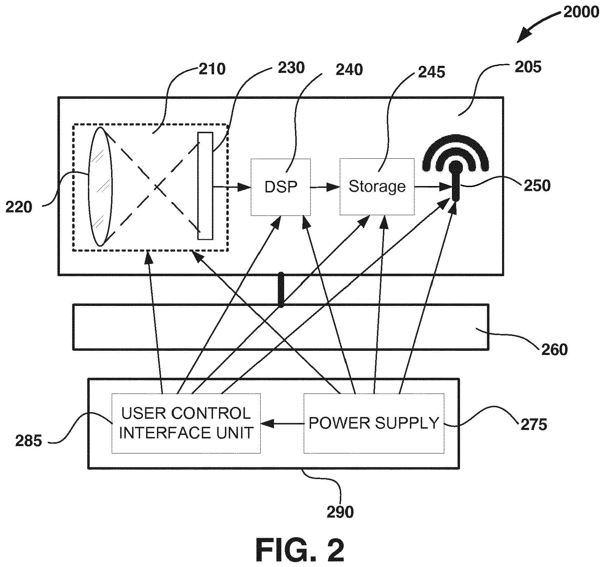

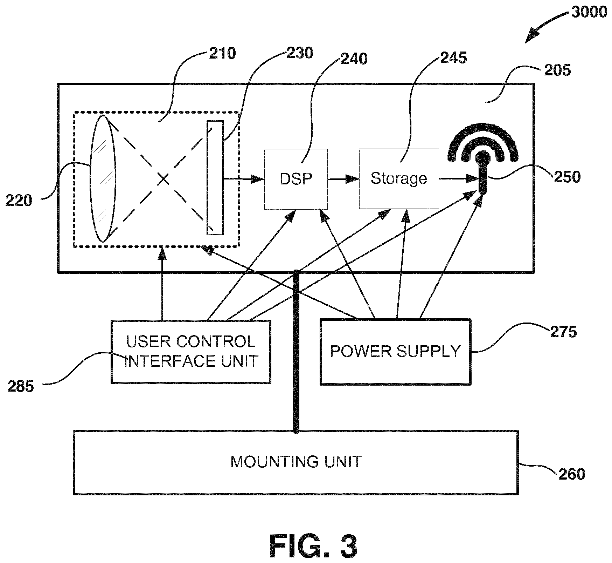

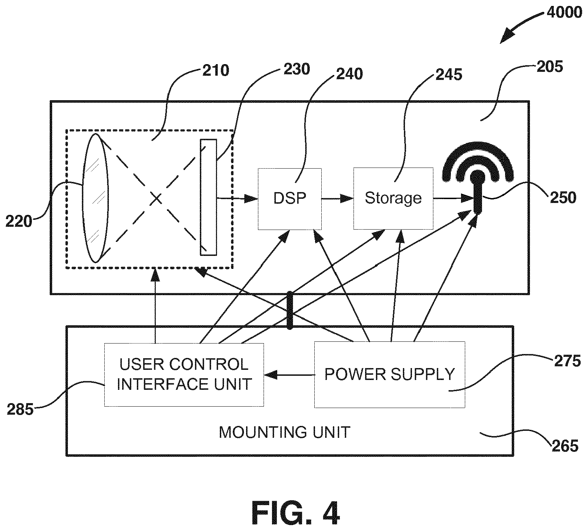

- an imaging unit, with optics, an image sensor, an image processor, and a data storage device used to store images captured by the image sensor and processed by the image processor (see, *e.g.*, image recording unit **205** shown in FIGS. 2, 3, and 4);
- a mounting support that mechanically engages the imaging unit to support and orient the image capturing device (see, *e.g.*, mounting unit **260** shown in FIGS. 2, 3, and 4);
- a user interface control unit and a power supply module in a common housing but housed separately from the image capturing device and from all other modular components (see, *e.g.*, new device **290** shown in FIG. 2);
- a user interface control unit housed separately from the image capturing device and from all other modular components (see, *e.g.*, user control interface unit **285** shown in FIG. 3);
- a power supply unit comprising at least one power supply, housed separately from the image capturing device and from all other modular components (see, *e.g.,* power supply **275** shown in FIG. 3);
- a mounting support, a user control interface and a power supply in a common housing - but housed separately from the image capturing device and from all other modular components (see, *e.g.*, mounting unit **265** shown in FIG. 4).

Providing these and similar modular components permits a user to select, based on the activity to be recorded, a suitable video recording device architecture with appropriate optics, user control device, mounting, and power source, all specifically selected for being suitable for the activity to be recorded. For example, the user may select additional power supply component(s) for extended recording time, smaller power supply when the weight of the power supply may be burdensome, additional video storage capacity for recording long sessions (especially when saving to the cloud is either not available or not preferred), mounting accessories for mounting the recording device on a person in a variety of ways (helmet mounts, chest mounts, etc.).

Certain implementations of the inventive device may be used in the following manner. A camera is employed to acquire images during automatic video recording of a moving subject having a velocity of movement. The system acquires location data for the camera and for the subject, determines a distance between the camera and the subject, estimates uncertainties of locations of the camera and of the subject, determines the velocity of the subject's movement, calculates a required field of view based at least on the distance between the camera and the subject, on the estimated uncertainties of the locations of the camera and of the subject, and on the velocity of the subject's movement. The images are acquired repeatedly and saved as images corresponding to the calculated required field of view.

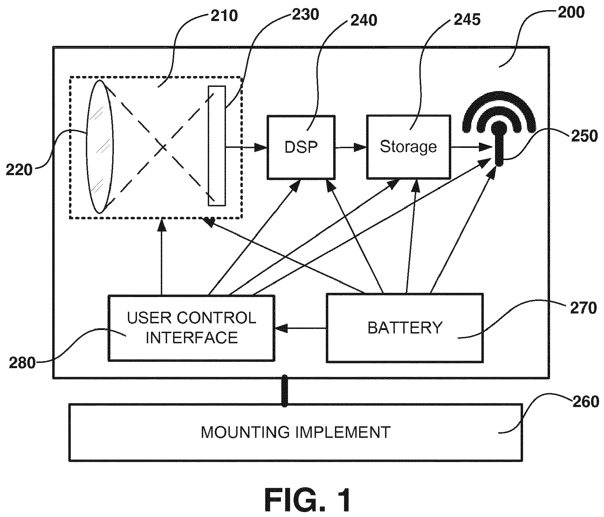

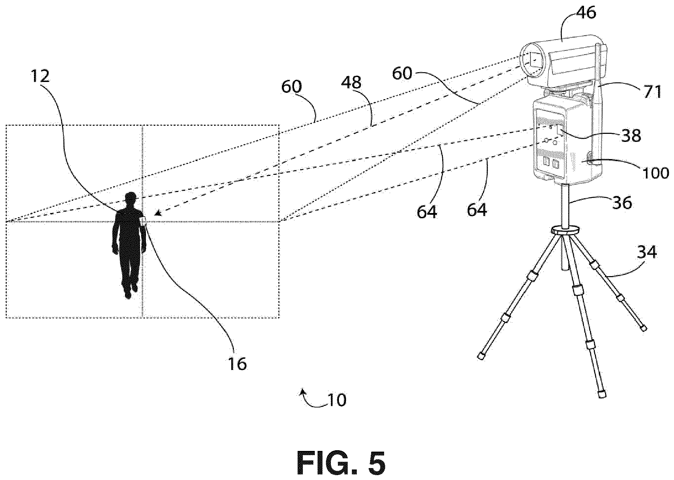

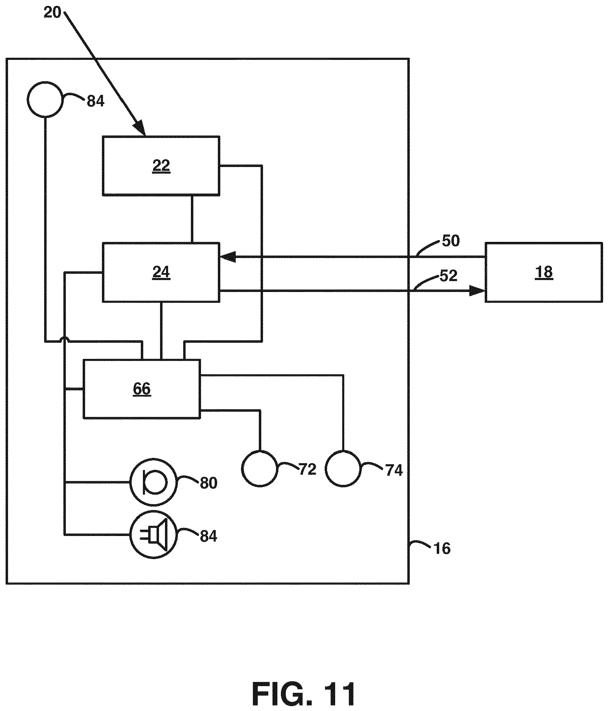

In another implementation, the modular architecture that is described with the aid of FIGS. 1-4 and 16 below provides for cameras supported on wearable items (*e.g.*, helmets) and these cameras are capable of automatically tracking a subject other than the user who is wearing the camera. In a related implementation, the same camera that is a pan-tilt-zoom (PTZ) camera when tracking a subject is converted into an image-stabilized POV camera when not in tracking mode. This conversion may be automatic in both directions; if there is a subject associated with a tag (also referred to as a remote device when certain configurations are discussed, as in reference to FIG. 5 below) in the vicinity, the camera (in PTZ mode) automatically will be recording the activities of that subject, provided the camera and tag are paired. A discussion of the concept of pairing appears below with reference to FIG. 11. If no paired tag is in the vicinity, the camera is stabilized and its zoom lens is adjusted such that it works as a POV camera.

MEMS (micro-electro-mechanical systems; including but not limited to accelerometers, gyroscopes, and the like) hardware both in the cameras and in the tags in combination with appropriate firmware enables them to become paired by simply "bumping" them with each other. During such action, the coincidental acceleration is registered. Subsequent "bumping" of further cameras and/or tags may enlarge the circle of hardware that operates together as paired devices.

FIG. 1 shows a schematic diagram of the major components of a conventional digital camera **200**. Camera **200** is mounted on mounting implement **260**, as shown. Mounting implement **260** could be a tripod or, in the case of an action camera, a helmet or another device. In the case of an automatic recording system (described further below), mounting implement **260** may be an orientation controller. In other applications mounting implement **260** may be a "passive" device that simply replaces the hand that otherwise would hold the camera. Indeed, mounting implement may not be needed if the videographer or photographer is willing and able to hold the camera during recording.

As illustrated in FIG. 1, camera **200** comprises optics **210** (which may be considered a combination of lens system **220** and image sensor **230**). In modern digital cameras, image sensor **230** is a pixelated device that requires electrical power to operate and connections to read the information from the sensor. The electrical connections to image sensor **230** are not shown. Battery power from battery **270** is connected to optics **210** because focusing of optics **210** may also require electrical power. The information read out of image sensor **230** is transformed by digital signal processor (DSP) **240** and stored in storage device **245**. In many cameras, images may be transferred from the camera using wired connections (not shown) or via radio **250** to personal devices or to a cloud-connected device or service. Battery **270** provides power to the electronic parts described, as shown. Camera **200** is also shown equipped with user control interface **280** that allows the user to control the settings and operation of all electronic elements mentioned. In FIGS. 1-4 and 16, a heavy line drawn from the mounting implement (which may also be referred to herein as a mounting unit) to the camera or to the inventive image recording unit is used to indicate a mechanical connection.

A preferred method of the present disclosure involves providing a user with image capturing and related components wherein the components are selected and arranged by a user to record a variety of activities. According to an implementation hereof, modular units or components are provided that may be assembled by users in a variety of ways into an image capturing device. The modular units preferably have multiple variants. According to the preferred method hereof, the provision of the modular image capturing device units permits a user to select, based on the user-desired activity to be recorded, from the modular components to interface with an imaging unit to provide user-desired optics, user control, mounting, and power suitable for the activity to be recorded. FIGS. 2-4 and 16, for example, illustrate various configurations of the modular units forming an image capturing device.

FIG. 2 shows a schematic diagram of the major components of a first implementation of the inventive image capturing system of the present disclosure. FIG. 2 illustrates an assembly of modular components forming image capturing device **2000**. The system shown in FIG. 2 comprises image recording unit **205**. Notably, image recording unit **205** replaces camera **200** of FIG. 1. Image recording unit **205** (at least embodying herein an imaging unit) preferably comprises optics **210**. Optics **210** comprises a combination of lens system **220** and image sensor **230**, as shown. Variants of image recording unit **205** are preferably provided having different types of optics (e.g., a fisheye lens). The information produced by image sensor **230** is read out and transformed by digital signal processor **240** and stored in storage device **245**. Images can be transferred using a wired connection (not shown) or via radio **250** to personal devices or to an cloud connected cloud or service. Image recording unit **205** also comprises appropriate connectors (not shown) to power supply **275** and to user control interface unit **285**; however, power supply **275** and user control interface unit **285** are not parts of image recording unit **205**. Rather, power supply **275** and user control interface **285** are integrated into a new device **290**. Image recording unit **205** of FIG. 2 is preferably much lighter than a conventional camera. Connections for power delivery and for control of image recording unit **205** may be executed in a variety of ways, including both wired connections (*e.g.*, via USB ports) and wireless connections. Mounting unit **260** is retained as a separate unit that supports image recording unit **205**. Variants of mounting unit **260** are preferably provided and may include a helmet mount, chest mount, tripod, etc.

FIG. 3 shows a schematic diagram of the major components of a second implementation of the inventive image capturing system of the present disclosure. FIG. 3 illustrates an assembly of modular components forming image capturing device **3000**. The implementation shown in FIG. 3 differs from the implementation shown in in FIG. 2 in that user control interface unit **285** and power supply **275** are separate units not integrated into a new device (*i.e.,* new device **290** of FIG. 2). A user may choose such a configuration of modular elements so that the camera may be mounted with the battery power and user interface located elsewhere, for example on a body mount or jacket pocket.

FIG. 4 shows a schematic diagram of the major components of a third implementation of the inventive image capturing system of the present disclosure. FIG. 3 illustrates an assembly of modular components forming image capturing device **4000**. In the implementation shown in FIG. 4, user control interface unit **285** and power supply **275** are integrated with mounting unit **265**, as shown. Mounting unit **265**, is different from mounting unit **260** shown in FIGS. 1-3 in that it is no longer a passive device for mechanical support only. Those with skill in the art will now appreciate that further variations wherein only either user control interface unit **285** or power supply **275** is integrated with a mounting unit.

FIG. 5 shows a schematic diagram illustrating an implementation of an automatic video recording system **10**. In the system shown in FIG. 5, camera **46** is mounted on top of orientation controller **100**. Orientation controller **100** is mounted on mast **36** of tripod **34**, as shown. Automatic video recording system **10** is portable so that it may be taken to and set up at a recording venue. Automated video recording system **10** is configured to track subject **12** associated with remote device **16** as subject **12** moves freely in the environment. In the implementation shown in FIG. 5, orientation controller **100** pans and tilts camera **46** such that camera **46** points at subject **12** and remains pointed at subject **12** as he or she moves. It is noted that subject **12** is shown as a person, but subject **12** may also be an animal or an object. Accordingly, the camera axis (the axis of the lens, or lens system, of camera **46**) points in the direction of pointing vector **48** between camera **46** and subject **12**. Strictly speaking, camera **46** points in the direction of remote device **16**. This is, in part, due to communication between orientation controller **100** and remote device **16**. Orientation controller **100** preferably comprises antenna **71**, as shown. Antenna **71** serves to facilitate communication with remote device **16**.

In the implementation shown in FIG. 5, the zoom of camera **46** is preferably adjusted so that subject **12** is entirely within the field of view (FOV) **60** of camera **46**. Optionally, a light source, namely, light emitting diode **38**, illuminates FOV **60** giving subject **12** feedback regarding whether or not camera **46** is appropriately oriented at subject **12**. The light source beam is depicted as beam **64**.

The components of automatic video recording system **10** may be configured and integrated in a number of different ways in keeping with different implementations of the present disclosure.

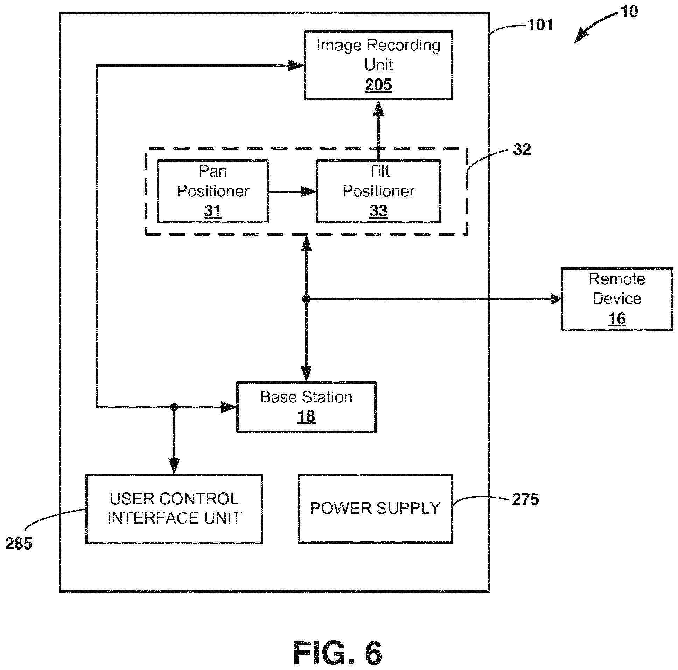

FIG. 6 shows a block diagram illustrating a preferred "all in one" implementation of an automatic video recording system. In FIG. 6, automatic video recording system **10** comprises image recording unit **205**, positioner **32**, base station **18**, user control unit **285**, power supply **275**, and remote device **16**, as shown. Positioner **32** comprises pan positioner **31** and tilt positioner **33**, as shown. In automatic video recording system **10**, all units, except remote unit **16**, are integrated into recording unit **101**. In FIGS. 6-9, important connections are indicated with arrows. However, arrow connections of power supply **275** are omitted for clarity.

Automatic video recording system **10** of FIG. 6 differs from automatic video recording system **10** shown in FIG. 5 in that in FIG. 5, camera **46** is separate from pan positioner **31**, tilt positioner **33**, and base station **18**, all of which are integrated in what is described with reference to FIG. 5 as orientation controller **100**. Also, camera **46** of FIG. 5 comprises controls and power supply.

Referring to FIG. 6, recording unit **101** is preferably mountable on a tripod or any appropriate support. In some implementations, the support may also travel. Base station **18** communicates with remote device **16**. In one implementation, the communication between base station **18** and remote device **16** is by two-way radio communication and the current location of remote device **16**, determined using LDT, is sent to base station **18**.

Base station **18** communicates with and commands pan positioner **31** and tilt positioner **33** based on information sent to base station **18** from remote device **16**. The output commands from base station **18** may comprise voltage signals that represent the necessary pan and tilt angles and angular velocities to positioner **32**. Such commands are preferably based on a procedure that provides smooth and efficient positioning of recording unit **101** and integrated image capturing device **205** to generate high quality video. Additionally, commands are sent from base station **18** to image recording unit **205**; such commands include, for example, start/stop recording or zoom in/out. Focus and zoom commands may be based on a computed distance between recording unit **101** and remote device **16**. The focus and zoom commands are also preferably based on the size and velocity of movement of the subject being recorded. As illustrated in FIG. 6, pan positioner **31** preferably turns tilt positioner **33**, and with it, image recording unit **205**. Tilt positioner **33** preferably tilts image recording unit **205**. Pan positioner **31** and tilt positioner **33** preferably send data about the current orientation of image capturing device **205** to base station **18**.

At least one advantage of the automatic video recording system of FIG. 6 is the ability to have well-defined information about the orientation of image recording unit **205** with respect to pan positioners **31** and tilt positioner **33**. When setting up the automatic video recording system of FIG. 5, the user may have to carefully mount camera **46** on orientation controller **100** with a well-defined orientation and must generally make sure that the mounting is secure, such that it will not change during the recording. Due to the integration of all components of automatic video recording system **10** into recording unit **101** (FIG. 6) the orientation of image recording unit **205** is defined more precisely and with higher certainty compared with the implementation of an automatic video recording system wherein camera **46** is mounted on orientation controller **100** each time the system is used (FIG. 5). The automatic video recording system of FIG. 5 is advantageous in that it permits using a variety of existing cameras as recording devices but it also limits automatic camera control to those compatible with the particular hardware and firmware installed in orientation controller **100**.

The implementation of automatic video recording system **10** shown in FIG. 6 has the advantage that image recording unit **205** may be controlled to have the correct zoom and focus during a recording session. Cameras are often equipped with an automatic focus feature; however, such an automatic focus feature focuses on any object or person that may pass in front of the camera including those accidentally passing between camera **46** and subject **12** (FIG. 5). During sporting activities, a host of people and/or objects may pass between the camera and the desired recording subject. A typical camera will adjust the focus when such people or objects pass between the camera and the desired recording subject creating an undesired result. For example, when filming a surfer, a camera with an automatic focus feature enabled may incorrectly change the focal distance based on waves or other surfers. In the case of a soccer game, other players or spectators between the camera and a subject player may cause unintended change in focus. For this reason, in absence of camera control during recording, it is necessary to turn the autofocus of the camera off. The implementation of automatic video recording system **10** shown in FIG. 6 enables control of the zoom and focus of integrated image recording unit **205** to avoid the above-noted problems.

When recording automatically using systems such as the one depicted in FIG. 5, there is a delay between the movement of subject **12** and movement of camera **46**. This delay is mostly attributed to the time lag by LDT used for automatic video recording systems to detect movement of remote device **16**. Additionally, time is required for remote device **16** to communicate with base station **18**, to compute the desired camera direction, translating the computed directions into corresponding commands for the positioners, and lastly, but very importantly, to actually orient image recording unit **205**. As a result of this delay, subject **12** may be outside of the center of FOV of image recording unit **205**, particularly when subject **12** moves rapidly. However, autofocus focuses the camera on whatever is at the center of the FOV. This is another reason why the automatic focus feature of a typical camera may not work properly. Base station **18** of the automatic video recording system of FIG. 6 preferably computes the distance between image recording unit **205** and remote device **16** and adjusts the focus of image recording unit **205** so that subject **12** remains in focus. In addition, image recording unit **205** is much lighter than camera **46**. Thus, recording unit **101** is more responsive than orientation controller **100**.

It is noted that recording unit **101** of automatic video recording system **10** shown in FIG. 6 may also be used alone without remote device **16**. In such a case, the automatic video recording system may be operated based on image recognition. In addition, recording unit **101** may be operated manually while attached to a tripod or in a hand-held manner. It may also be used attached to a sporting or other device (*e.g.*, a bicycle, a surfboard, etc.) for POV recording. With the implementation illustrated in FIG. 6, a parent at a child's soccer game would be able to pause the automatic recording and tracking of their child in the field and operate the automatic video recording system to take pictures or footage of another player who is not being tracked.

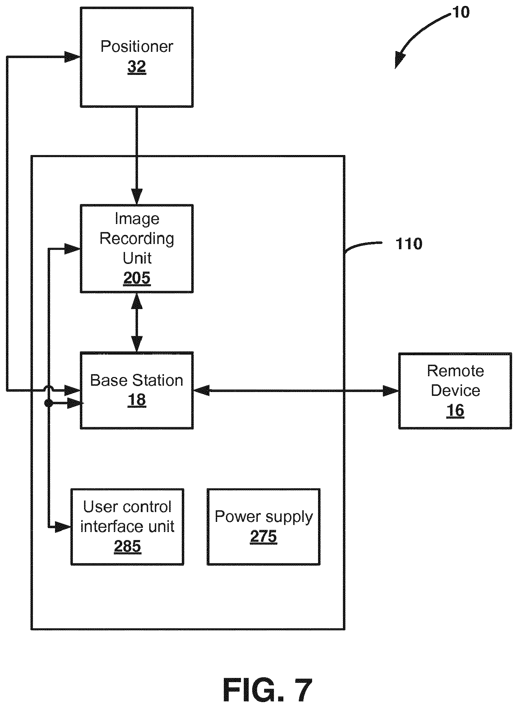

FIG. 7 shows a block diagram illustrating another implementation of an automatic video recording system according to the present disclosure. In the implementation of FIG. 7 automatic video recording system **10**, image recording unit **205** is integrated with base station **18**, user control interface unit **285** and power supply **275** into a "smart camera" **110**. Smart camera **110** does not include the pan and tilt drive mechanisms thus making it lighter in weight compared with recording unit **101** shown in FIG. 6. Such a weight difference is advantageous for POV filming applications. When used as part of an automatic recording system of FIG. 6, smart camera **110** is preferably connected to positioner **32** to track a subject associated with remote device **16**. Smart camera **110** has all advantages of being controllable from base station **18**, which is part of it. In addition, smart camera **110** may be completely controllable, including tracking functions from remote unit **16**. Moreover, smart camera **110** may or may not have its own power source. Since it is connected to positioner **32** during operation within an automatic recording system, batteries operating the positioner may also be used to operate smart camera **110**. When smart camera **110** is operated in a POV mode, power supply **275** may be included in the mounting that holds it or may constitute a separate unit.

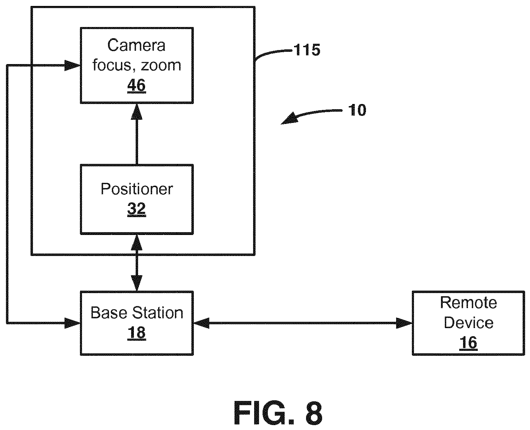

FIG. 8 shows a block diagram illustrating yet another implementation of an automatic video recording system according to the present disclosure. Automatic video recording system **10** of FIG. 8 comprises camera **46** and positioner **32** (preferably incorporating pan and tilt features) integrated as pan-tilt-zoom (PTZ) camera **115**. Base station **18** is communicatively coupled to camera **46** and positioner **32**, as shown. Base station **18** controls camera **46** and positioner **32**. At least one advantage of the configuration of the automatic video recording system of FIG. 8 is that the camera orientation is fixed with respect to positioner **32**. Additionally advantageous, since base station **18** is physically separated from PTZ camera **115**, a single base station may be configured to control multiple PTZ cameras **115** and/or multiple automatic video recording systems having various architectures. The difference between common PTZ cameras used in security equipment, for example, and those described herein is that cameras used for recording sporting events are equipped with image stabilization and may be equipped with firmware that compensates for mounting imperfections that are characteristic for field use, *i.e.*, for use when cameras are mounted on tripods and may not be held such that the pan axis is vertical. In addition, PTZ cameras that are not designed for cooperative tracking but rather for observation are controlled either to perform routine movements to cover the observed area or to be activated by motion detectors and follow the subject first detected by the camera after "waking up".

According to an implementation of the present disclosure, a single subject with one remote device may be filmed by a plurality of cameras from different angles and/or at different locations. For example, the inventive PTZ cameras **115** may be positioned at different locations (*e.g.*, multiple locations along a soccer field or down a ski slope). In such applications, a single base station may control all PTZ cameras **115** configured to track a single remote device **16**. While typical security PTZ cameras are powered from power outlets, PTZ camera **115** is either equipped with its own power supply or receives power from a battery associated with the mounting implement used with the camera.

According to another implementation hereof, multiple subjects with distinct remote devices may be filmed using multiple cameras wherein the multiple cameras are controlled by a single base station. In implementations that comprise a plurality of the PTZ camera units similar to those shown in FIG. 8, the base station receives and stores information regarding the current locations of each PTZ camera as well as the locations of each remote device. An important difference between the common PTZ camera based security systems and the inventive system described herein is that the locations of the PTZ cameras of the inventive system are variable and are input in the system as it is set up for a particular event. For example, a coach of a sports team would benefit from such a system as the coach would be able to generate video footage for each player during a game. In addition, camera locations may be subject to change even during filming.

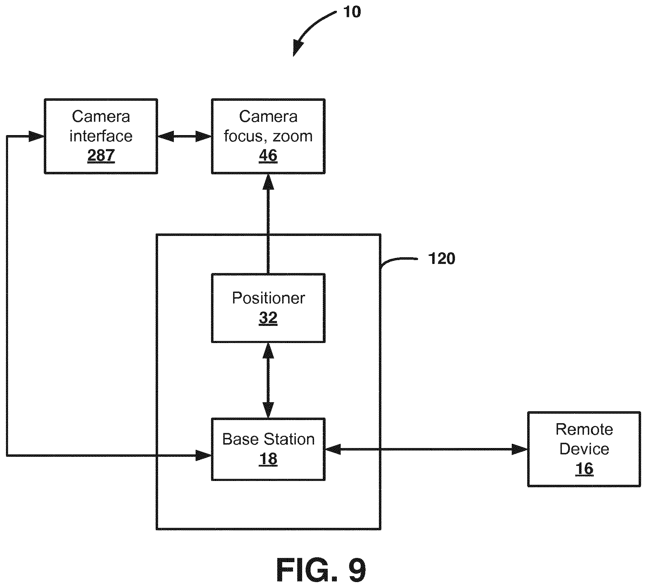

FIG. 9 shows a block diagram illustrating yet another implementation of an automatic video recording system according to the present disclosure. The automatic video recording system of FIG. 9 comprises base station **18** and positioner **32** integrated into pan-tilt-zoom controller **120**. Note that orientation controller **100** of FIG. 5 is similar to PTZ controller **120**, the difference being that the former does not necessarily comprise camera controls. However, as noted above, the task of creating a universal camera interface is a formidable one. Thus, as a practical solution, PTZ controller **120** is connected with camera interface **287**. Camera interface **287** is an exchangeable separate unit that incorporates hardware and firmware that is specific to the particular camera **46** used in system **10**. Thus, at least one advantage of the automatic video recording system of FIG. 9 is flexibility of use with a variety of cameras, although the need for the camera interface makes this system more complex and more expensive. Camera interface **287** preferably clips on PTZ controller **120**. If one wishes to change cameras and has the interface for each, the change is done simply by clipping on the appropriate interface **287**.

A variation of the automatic video recording system implementation of FIG. 9 is one equipped with a motorized pan and a manually adjustable but non-motorized tilt. Such an implementation is useful for saving weight and expenses in the case of applications where maintaining a constant tilt during filming is useful. For example, such "panning devices" are perfect for filming surfing because essentially all activity occurs at the water surface.

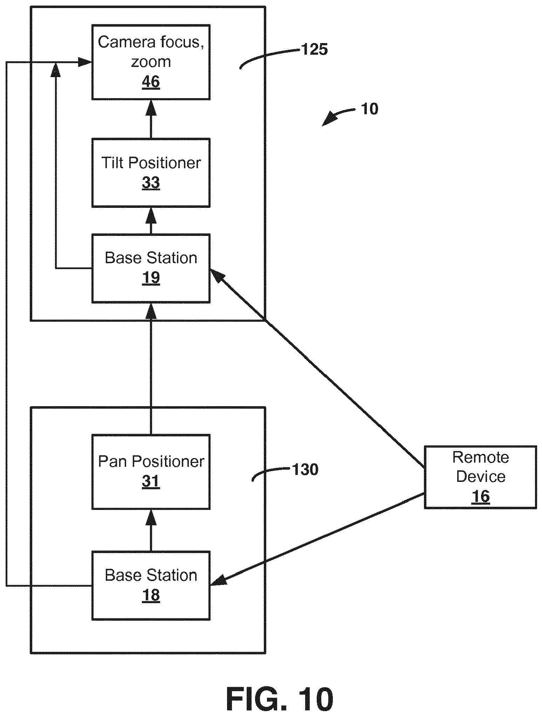

FIG. 10 shows a block diagram illustrating yet another implementation of an automatic video recording system. In the automatic video recording system of FIG. 10, pan positioner **31** and tilt positioner **33** are housed separately. Base station **18** and pan positioner **31** are integrated in pan controller **130**. Tilt positioner **33** and camera **46** are integrated in camera module **125**. In some applications, if the movements of a subject are able to be tracked by pan movement alone (*e.g.*, if there is very little movement in vertical direction), one may choose to use pan controller **130** as a panning device (like orientation controller **100** of FIG. 5) and attach a camera to it. Specialized implementations for some sporting activities (*e.g.*, bungee jumping, filming drones, filming stars, planets, the moon, etc.) may need an automatic tilt positioner **133**. If at the same time a pan positioner is not necessary, pan positioner **130** may be omitted from the system and tilt controller **125** may take over. To facilitate this, tilt controller **125** is equipped with a base station **19** of its own. In this system, the base station is duplicated but since it is a relatively small and inexpensive component, this duplication makes sense. The automatic video recording system of FIG. 10 provides users with flexibility to use dedicated devices with only the features (*e.g.*, automatic panning or automatic tilt) the end user desires.

When describing the pan and tilt movements, it is noted that their sequence (order) is reversible as long as both positioners are in operation. However, if one of the positioners is absent, differences in the resulting video footage will be observed. If a constant tilt is combined with automatic panning, the camera motion will be different if the pan positioner moves around a substantially vertical axis compared with a tilted axis. In the case of a substantially vertical axis, the camera will track horizontal motion of a subject at a particular altitude. In the case where the panning device is tilted, the camera will track motion that has a minimum or maximum altitude in the direction that is within the plane of the tilt.

In standard video recording sound is recorded by the video recorder itself. In the case of the automatic video recording systems of the present disclosure, this method of sound recording is often not optimal since the action being recorded is not in the vicinity of the camera and there is no cameraman to provide comment. Rather, subject **12** of the recording, *i.e.*, the person with remote device **16** of automatic video recording system **10** (see FIG. 5) may wish to record comments. If the motors and gears of orientation controller **70** generate noise, camera **46** will record that noise. Furthermore, it may be likely that camera **46** of automatic video recording system **10** is in the vicinity of other persons disinterested with the recording and the camera may record their unrelated conversations or comments. For all these reasons, it may be desirable to replace the sound recorded by camera **46** with a soundtrack recorded by subject **12**. This is accomplished by providing a voice-sensing device, such as a microphone, in remote device **16** located with the subject **12**. In an implementation of the present disclosure, remote device **16** includes one or more voice or sound sensing devices. Further, remote device **16** may be capable of recording and storing sound electronically for later embedding in the corresponding video recorded or transmitting sound information for recording, storing, and/or syncing.

There is a significant advantage to empowering subject **12** to use remote device **16** for recording and transmitting voice commands to orientation controller **100**. The use of voice commands may be much easier and efficient during physically demanding sporting activities than alternatives like pushbutton or touchscreen inputs.

FIG. 11 shows a schematic diagram illustrating the main components of a remote device equipped with a microphone and speaker according to an implementation of the present disclosure. The location of the remote device **16** may be determined by global positioning antenna **22** that receives satellite signals **20** (or appropriate terrestrial signals) from a positioning system. An example of such a positioning system is the Global Positioning System (GPS). Alternatively, other LDTs may be employed; in such implementations some components of remote device **16** would be replaced with components that are appropriate for the particular method of LDT employed. Data received by global positioning antenna **22** is communicated to a microcontroller/memory unit **66** and to a radio transceiver **24**. Control buttons **72** and **74** may be included to power on and off remote device **16** and for other functions. A status indicator LED **84** preferably shows system readiness. A battery, charger contacts, and a charge indicator LED are also components of remote device **16** but are not shown in FIG. 11. Remote device **16** preferably comprises microphone **80** and speaker **87**, as shown.

Microphone 80 outputs electronic signals to microcontroller/memory unit 66 and to radio transceiver 24. Radio transceiver 24 is used for two-way communication (50 and 52) with base station 18 of automatic video recording system 10 shown more comprehensively in FIGS. 5-10 above. The two-way communication indicated by numbers 50 and 52 is preferably via radio waves (however, those with skill in the art will understand that other methods of communication may suffice). The radio transceivers in base station 18 and remote device 16 are preferably paired for each recording session. As a result of the pairing, the radio communication data packets are preferably preceded with an identifier code to avoid interference by unrelated transceivers operating in the same vicinity. In the implementation shown in FIG. 11, the position data obtained with the aid of global positioning antenna **22** is transmitted to base station **18**; base station **18** commands a positioner (or a multiplicity of positioners) to orient an associated camera (associated cameras) in the direction of remote device **16**. Remote device **16** is preferably an easily transferable device so that, for example, one surfer can easily pass it to another. Camera **46** of automatic video recording system **10** tracks and records whoever has remote device **16**.

In one implementation base station **18** can control "on/off", "record/stop recording", and other functions of camera **46**. With this type of control, the target or subject of the recording may use the communication feature between remote device **16** and base station **18** to control various aspects of the recording. The control may be exercised by physically engaging a button switch or touch sensor or alternatively by voice. For example, a surfer can speak the word "RECORD" when he begins to paddle to a wave and speak "STOP" when he or she wishes to stop recording. This feature is advantageous in that it eliminates the need to watch hours of surfing video to find those portions where the subject is actually surfing (which may be only a few minutes long). In another implementation, the user may send commands to the camera to take a burst of high quality still images.

In one implementation, sound is recorded at remote device **16** and transmitted to base station **18** and synchronized with the captured video. The audio information transmitted is discretized into audio information packets. Each audio information packet is time stamped and transmitted to base station **18**. Base station **18** verifies that the audio information packet was not corrupted during transmission and communicates with remote device **16** that the audio information packet was received correctly. If the audio information packet was corrupted, base station **18** communicates to remote device **16** to resend the audio information packet which base station **18** has designated as being corrupted. The audio information packet is matched to the appropriate time in the recorded video using the timestamp information. This process repeats while automatic video recording system is operating. Base station **18** communicates with remote device **16** to verify that it has received all of the transmitted audio information packets. If any audio information packets were never received by base station **18**, base station **18** communicates to the remote device which time periods are missing and the audio information packets corresponding to those timestamps are resent from remote device **16** to base station **18**. While the above is described with respect to an automatic video recording system, this process may be applied to any application where audio information is captured by a device separated from a recording device.

In another implementation of the present disclosure, a copy of the recorded sound file is stored at remote device **16** in addition to transmitting audio information packets to base station **18**. Storing recorded audio at remote device **16** is beneficial in that if the communication link between remote device **16** and base station **18** is compromised, the audio from remote device **16** may be used as a backup.

There are other functions of base station **18** that subject **12** may wish to control. For example, one could control positioner **32** to adjust or recalibrate the orientation of the camera **46** using remote device **16**. Such control may be operated by pushing appropriate buttons or by interfacing with a touch screen embedded in remote device **16**. Additionally, and preferably, such controls may be voice actuated so that the operation is hands free.

Positioner **32** is preferably designed to minimize noise associated with the mechanical components that may produce undesired sound (e.g., motors, gearboxes, etc.). This is achieved through incorporating noise shielding, physical dampening, and/or noise absorbing material in positioner **32** or in camera orientation controller **100**. These design measures may increase the cost and weight of the equipment but are useful if the sound is recorded by the camera **46**. Providing a soundtrack recorded by subject **12** makes dealing with noise issues associated with the positioner or camera orientation controller less necessary. Nevertheless, sound sensing and recording by the camera **46** may be useful. For example, even if a cameraman is not needed to operate the camera, friends nearby the camera may wish to periodically comment on the recording.

It may also be useful to record sound by base station **18** as well if base station **18** it at a separate location; see, *e.g.*, FIG. 8 where the implementation shown permits separation of base station **18** and PTZ camera **115**. In such an implementation, several cameras and several remote devices may be controlled by a single base station. Base station **18** could be controlled by an operator who oversees recording by all cameras and who would add meaningful commentary to the recording. In a related implementation, a person located at base station **18** may communicate to the tracked subject **12** through remote device **16**. In this implementation, base station **18** and remote device **16** preferably have two-way voice communication by radio.

According to hereof, remote device **16** is waterproof and shockproof. Waterproofing and shock proofing may be achieved by embedding or enclosing the components of the remote device in a polymer (with the exception of those surfaces that need to be exposed to provide electronic, electrical, or optical interfaces and touchscreens). In such an implementation, the polymer has an inside surface and an outside (exposed) surface. The inside surface is preferably in direct contact with the electronic and mechanical parts of the remote device unit. The outside surface of the polymer is part of the surface of the remote device and may serve in part as the cosmetic surface of the remote device. The outside surface of the remote device also includes surfaces of electrical or electronic contacts, surfaces of light pipes, lenses, and surfaces of screens, touchscreens, and the like. The outside surface can also include surfaces of microphones and speakers. While there are waterproof solid microphones available, a problem may arise when such a microphone is used while it is still wet from having been submersed in water immediately prior to use.

For this reason, microphones may also be mounted at an inner end of a narrow conduit such that reverse capillary action keeps water away from the sensor surface of the microphone. The outer end of the conduit is at the exposed surface of the remote device and the conduit leads away from the exposed surface. The inside surface of the conduit is hydrophobic and the microphone is mounted at the end of the conduit that is away from the exposed surface of the remote device. A funnel-like member between the end of the conduit and the sensing surface of the microphone may be used to mount a microphone that has a sensing surface area that is larger than the cross section of the narrow conduit.

One example of an application using the principles of the present disclosure includes filming a television show, such as a "reality" television show. The systems hereof may be used to film a scene in a crowded area without disturbing the scene (or without the expense of multiple camera crews). The reality television subject wears or otherwise is associated with a remote tracking device having a microphone so that all footage and events are captured as they occur. Multiple subjects may wear additional remote tracking devices with additional microphones. Cameras may be set up at different angles and elevations to track a single subject or multiple subjects or some combination thereof. Voice recordings may be time stamped to match them with the recorded images for later editing and production.

FIGS. 5-10 show automatic video recording system **10** configured to detect the location of and track subject **12**, such as a participant in a sporting event. Automatic video recording system **10** preferably comprises remote device **16**, preferably collocated with subject **12**, base station **18**, positioner **32**, and camera **46**. Base station **18** and remote device **16** preferably comprise microcontrollers and communication devices. Base station **18** determines a pointing vector **48** between camera **46** and remote device **16** based in part on sensor data obtained at the location of camera **46**. For further details, reference is made herewith to the '803 Patent Application incorporated by reference above. As subject **12** moves together with remote device **16**, pointing vector **48** is updated and base station **18** determines any angular position change and any change of zoom and focus necessary to keep the subject **12** within frame **60** of camera **46**. The zoom angle is defined by the lines **60**.

According to an implementation of the automatic video recording system **10**, a unique radio channel is used for two-way communication by a pair of remote device **16** and base station **18** that belong to the same user. According to another implementation hereof, multiple base stations **18** and remote devices **16** all use the same channel to communicate, but employ unique identification codes to pair a particular base station **18** with a particular remote device **16**. In such an implementation, a packet collision avoidance process may be used to ensure that paired units easily communicate with each other while not disturbing or being disturbed by other base station-remote device pairs that may be in use in the same area. This is used to make the communication unique and allows the simultaneous use of several automatic video recording systems in the same vicinity.

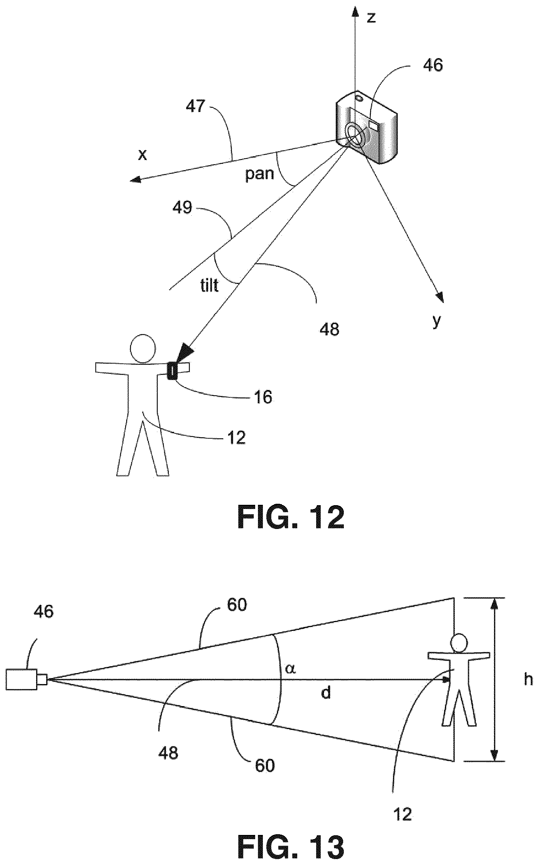

FIG. 12 shows a schematic diagram illustrating the angular relationship of various components of an automatic video recording system. More specifically, FIG. 12 illustrates the angular relationships between a camera of an automatic video recording system and the subject being filmed. The orientation of pointing vector **48** may be described as an angular deviation from original pointing direction **47** of camera **46**. In an earth fixed coordinate system centered at location of camera **46**, an orientation angle may be thought of as a sum of a pan angle and a tilt angle. It is convenient to think about the earth fixed coordinate system as having the *x* axis along initial direction **47** of camera **46**. The pan angle is in the *xy* plane of the coordinate system between directions **47** and **49**. The tilt angle is between the directions **49** and **48**, in a plane that is perpendicular to the *xy* plane.

Base station **18** outputs positioning commands to positioner **32** and camera operation commands to camera **46**. Positioner **32** positions camera **46** to point along the relative position pointing vector **48** at remote device **16**, and the zoom level of camera **46** is set such that the field of view of camera **46** is larger than subject **12**. Further, the focal distance of camera **46** is controlled so that subject **12** is in focus. The choice of the optimal frame size is generally a compromise between the desire to zoom in as much as possible in order to show as much detail as possible while keeping subject **12** within the FOV without excessive rapid camera movements given any limitations of the LDT used. These limitations include limited precision and finite response time (lag time).

Choosing optimal frame size may be accomplished in a variety of ways. In an implementation for creating videos, the default of automatic video recording system **10** is to record frames that are somewhat larger than human size. It is useful to provide user control for the desired zoom level. For example, for recording surfing sessions where large waves are present, a user may wish to have the entire wave in the field of view. In another implementation, for recording sporting applications with rapid movements, it is useful to record frames that are significantly larger than the human subject **12**. In such applications, if the recording frame is too small with respect to the subject, the subject may get to the edge of the frame very quickly. The camera orientation is adjusted to track subject **12**, and if the FOV is narrow, the camera orientation may have to be adjusted too rapidly for a pleasant viewing experience.

FIG. 13 is a schematic drawing of the geometric relationships pertinent to zoom angle calculation. Since the distance *d* between camera **46** and subject **12** is known by virtue of LDT, the zoom angle $\alpha$ between the lines of FOV **60** of camera **46** may be calculated for a FOV of size *h*. For example, if *h*=40 feet and the distance is *d*=400 feet, the zoom angle may be expressed as

$$\alpha = 2\arctan\frac{h}{2d} \approx 5.7^o.$$

In an implementation where the automatic video recording system is intended for use in a variety of applications, it is advantageous to enable user input of a particular application type by choosing the estimated frame size or by inputting the size of the subject **12**. For example, in a kite surfing application, one may want to zoom out to a wide angle that allows the kite, which can be 25 meters above the subject kite boarder, to be inside the frame.

It is also advantageous to zoom out when the accuracy of the LDT becomes questionable or the LDT signal is lost or is intermittent.

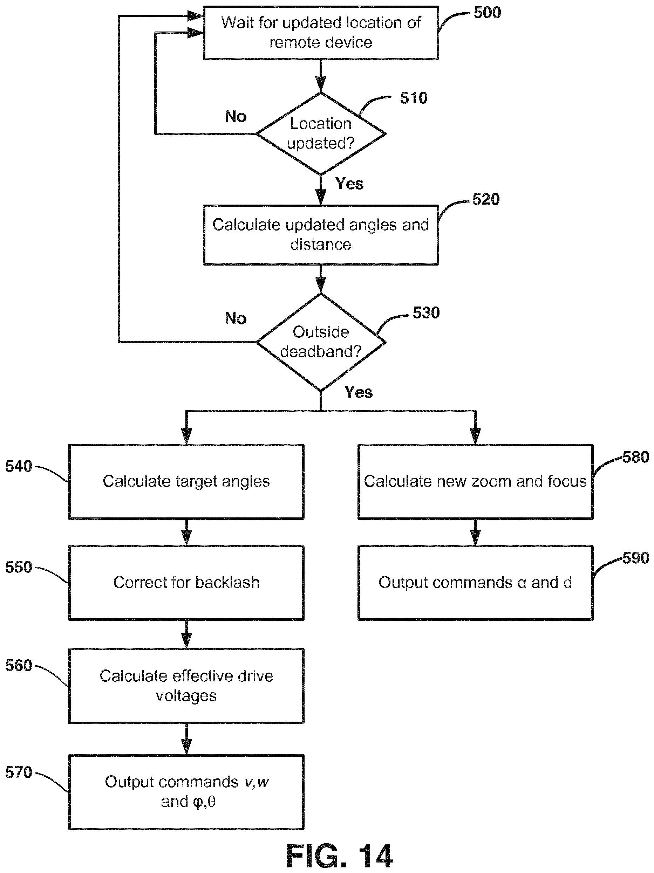

FIG. 14 is a flowchart illustrating a method of operating an automatic video recording system with zoom and focus control according to an implementation of the present disclosure. Location determination technology generates location data of remote device **16** periodically several times each second. Base station **18** stores data about the current location and orientation of camera **46**. A communication link between base station **18** and remote device **16** is present. During the continuing operation of the automatic video recording system an updated location of remote device **16** (*i.e.*, the target of the recording) is expected. Base station **18** of automatic video recording system **10** waits to receive an updated location of remote device **16** from the location determination technology used (step **500**). When an updated location is received in step **510**, updated values for the pan and tilt pointing angles and the distance between camera **46** and remote device **16** are determined in step **520**. A deadband is preferably set meaning that the camera orientation and zoom will not be changed unless the change in the orientation and/or length of pointing vector **48** is outside of certain preset limits. A determination of whether the updated angles and distance of step **520** is outside of the deadband is performed in step **530**. If the new location coordinates indicate that subject **12** has substantially moved (*i.e.*, moved outside of the deadband), several events will occur. Target pointing angles are calculated in step **540**. The target pointing angles are pan and tilt angles to which camera **46** will be moved based on the latest information received from the location determination technology. The target pointing angles are not the angles of the current camera orientation but rather the angles to which camera **46** would be turned if current movement of the subject **12** continues without change. The target pointing angles are modified by backlash compensation in step **550**. For further details, reference is hereby made to the '803 Patent Application incorporated by referenced above. Effective drive voltages (for causing pan and tilt movements) are calculated in step **560**. Commands based on the effective voltages are output in step **570**. These voltages regulate both the pan and tilt turning angles, denoted by $\varphi$ and *q*, and the pan and tilt turning velocities, denoted by *v* and *w*, respectively. Simultaneously, zoom and focus are calculated for the new position of subject **12** in step **580**. Commands for the new zoom angle α and new focal distance *d* are generated in step **590**. The commands for the turning angle and turning velocity are outputs for positioner **32**; the commands for zoom and focus are outputs for camera **46**. The process of FIG. 14 is repeated every time a location update is generated in the remote device **16**.

If step **500** takes too long, the output commands reorient and refocus camera **46** to the last detected position of subject **12**. Here "too long" may be defined, for example, as missing two consecutive updates. Using this example, "too long" could be about 500 milliseconds if the normal updating frequency is about five Hz. Base station **18** may be programmed to command camera **46** to zoom out until an update from location determination technology is received again. In step **520**, the updated location coordinates of remote device **16** are recalculated in terms of angular orientation of the camera and in step **530** the difference of the updated and previous orientations are compared to a deadband in order to decide whether the change in the orientation warrants camera movement. As an example, if the angular change is less than about one degree, the camera does not move. This feature prevents unnecessary small movements. For example, if the subject is a speed skater and the remote device is attached to his arm, left-right arm swings would occur nearly every second. It would be very unpleasant to watch a video following these swings. If the subject moves outside of the deadband, a target camera angle is calculated in step **540**; the angle calculated in step **520** is one input for the calculation in step **540**.

At velocities that exceed a set limit, it is expected that the camera movement may lag substantially behind subject **12** and based on the last two or three or more angular positions a subsequent position may be predicted. This can be done using linear extrapolation from two data points, using least square fit linear extrapolation from more than two points, or using quadratic fit to at least three points, etc.; the result is a target angle. After software corrects for backlash in step **550**, effective driving voltages are computed in step **560**. Proportional-integral-derivative methods may be applied in this step. In one implementation, the effective driving voltage depends on the difference between the target angle and current camera orientation, such that if the difference is large, the angular velocity of the camera movement is larger as well.

In one implementation, after the location update is received, the driving voltage is higher (and the camera movement is faster) if the angular change is greater and even faster if the camera orientation has been already lagging. The voltage is calculated as V=K*(target angle - camera angle), where K is a proportionality constant. V is updated frequently, for example, even if the target angle is updated at about five Hz, V may be updated at about 200 Hz; the frequency of this updating depends on the frequency with which base station **18** receives updates from positioner **32** regarding the actual angular position of the camera **46**. In one implementation of automatic video recording system **10**, positioner **32** comprises one or more encoded wheel systems that generate the information regarding the actual angular position at any given moment.

If camera **46** gets close to the target angle, its movement slows down to avoid overshooting. In one implementation, the deadband is preferably recalculated when the subject moves past its boundary. Preferably, the deadband should move slower than the subject so that even moderate movement of the subject **12** in the direction of previous movement does move camera **46** but similar movement of the subject **12** in the reverse direction does not. This approach reduces unnecessary camera movements (*i.e.*, the jitteriness of the recording) to a significant extent.

As an alternative to proportional-integral-derivative control, pulse width modulation may be applied either alone or in combination with adjusting the voltage. Other control approaches may be employed in different implementations of the present disclosure depending on the type of motors used in positioner **32** to orient camera **46**. For example, velocities of stepper motors may be controlled by adjusting the time interval between step or microstep commands. Open loop control, which eliminates the need for feedback such as from an encoded wheel, may be used by keeping track of step count and direction.

In step **550**, the target angle is modified based on the known or estimated backlash of the driving motor and gearbox. In step **570**, the effective voltage and target angle are output to the positioner as there are two command parameters regulating a motor (for example, a pan drive). In implementations where multiple drives are used, each drive receives commands that result from similar processing.

In addition, in step **590**, base station **18** sends drive signals directly to the camera so that the focus and zoom, and therefore the field of view, are adjusted depending on the distance between camera **46** and subject **12**. Zoom is also adjusted depending on the velocity of the subject **12**. At high velocities, the automatic video recording system may not be able to keep the subject within the frame unless camera **46** zooms out (*i.e.*, the frame is enlarged). The reason for this is related to the lag of camera positioning movement with respect to the movements of the subject **12** and also due to the deadband. In a constant velocity situation, where the effect of the deadband may be discounted, the lag is due mainly to the time delay (latency) of the LDT. Other factors that may cause delay include the finite updating frequency of the location determination technology, the finite processing speed of the electronics in base station **18**, and the limited torque of the motors of the positioner **32** combined with the inertia of camera **46**. For example, using the values of the example above, assuming that the camera

zoom angle is $\alpha$=5.7 degrees, the distance between subject **12** and camera **46** is 400 feet, resulting in a frame width of 40 ft. If one assumes that the lag time is 0.6 seconds and that the subject **12** moves with a velocity of 40 feet per second (about 27 mph), in 0.6 seconds the subject **12** will move about 26 feet off center of the frame, meaning that the subject has moved outside the frame before LDT updates the subject's location. To avoid this situation, the zoom must be adjusted before the subject **12** goes off screen, *i.e.*, when his/her speed is, for example, 20 feet per second and accelerating. The higher the lag time, the velocity, and the expected velocity, the wider camera angle $\alpha$ is chosen to keep recording the subject **12**.

In applications where the lag of camera movement is significant, it may be counteracted by estimating the anticipated position of the target based on past location, velocity, and acceleration information and by instructing the positioner to move to an anticipated target angle. A process predicts "next" positions of subject **12** based on recent past location, velocity, and acceleration values using methods known to those having skill in the art. The angular velocity of positioning camera **46** is proportional to the size of the angle between a current position and "next" position of the subject **12**. Using predicted "next" positions provides for faster camera movement when necessary.

The process used by base station **18** estimates or predicts the magnitude of possible orientation error due to lag time and due to the uncertainty of LDT. Base station **18** is programmed to send a signal to camera **46** to adjust the zoom such that the field of view is sufficiently wide. In practice, the lag time may be as much as one second. Preferably, the camera should zoom out such that the movement of subject **12** during the lag time does not take the subject out of the FOV.

Another reason for zoom adjustment may be that the location of the subject is temporarily unavailable or has been missing for a period of time. Such missing data points may be due to a variety of causes. For example, in the case of LDT based on Global Positioning System, single data points may be missing due to various short term problems in satellite-to-antenna communication. Longer missing data sequences may be due, for example in a surfing application, to the subject being submerged in water. The process used by base station **18** is preferably designed to ignore single missing data points and to command camera **46** to zoom out when data is missing for multiple cycles. When the signal reappears, the subject **12** will likely be within the frame even if he or she has moved some considerable distance.

If there is no reason to zoom out, base station **18** sends a command to camera **46** to return to the zoomed-in state to produce recording with as high a resolution as feasible.

In one implementation, automatic video recording system **10** comprises a single positioner **32** and single camera **46** capable tracking multiple remote devices **16**.

For example, at a sporting event multiple subjects **12** may be within the view of camera **46**. The base station **18** computes an optimal direction for the camera, combined with appropriate zoom and focus based on the locations of multiple remote devices **16** to ensure that multiple subjects **12** appear within the field of view of camera **46**. In one implementation, commands are directed to orienting camera **46** and adjusting its zoom and focus to capture all subjects **12** in its FOV, if possible, and to select some subjects for recording if recording all subjects is not possible. In one implementation, automatic video recording system **10** provides feedback to the multiple subjects being recorded so that they may know when they are in the FOV or being recorded by camera **46**.

In the implementation where multiple subjects **12** are recorded with a single camera **46** and all subjects **12** cannot appear in the view at the same time, a selection of a set of subjects must be made. The selected subject or subjects may be determined by a plurality of alternative methods. For example, the system maximizes the number of subjects able to be captured in the field of view at a preset minimum zoom; or the system tracks subjects in a preset hierarchy; a primary subject is tracked but when additional subjects are in the vicinity of the primary subject, the system adjusts orientation and/or zoom of the camera to capture the primary subject and nearby secondary subject or subjects.

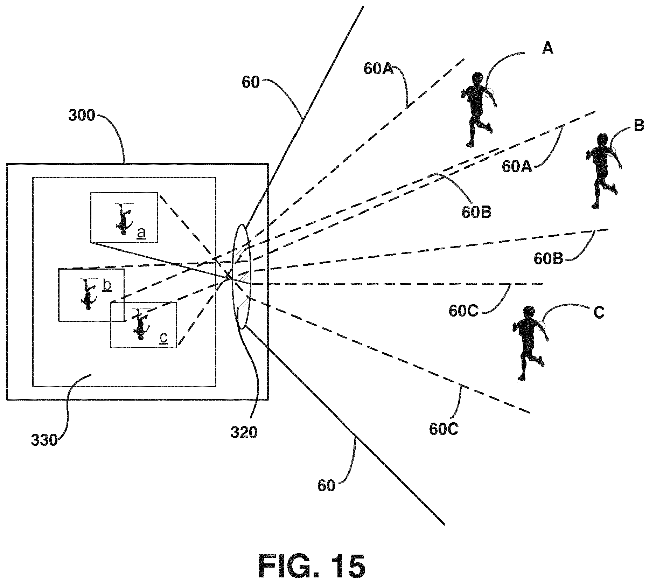

FIG. 15 shows yet another implementation of the disclosure. In the implementation of FIG. 15, image capturing device **300** is equipped with a very high resolution image sensor **330**. Image capturing device **300** is operated using wide angle optics **320** that has a sufficiently wide FOV to capture the desired subject's movements without changing its orientation. The FOV is shown in FIG. 15 by lines **60**. With the location and orientation of camera **300** known and the location of subject **A** determined using LDT, the system can crop the full video to the area just surrounding and including subject **A** to give the appearance in the cropped video that a zoomed camera was following subject **A**. This is made possible by selecting the pixels within the area **a** of image sensor **330**. The apparent FOV of the selected pixels of image sensor **330** are shown in FIG. 12 using broken lines **60A**. An example of this implementation employs a high resolution stationary camera facing a snow ski run, such that the view field of the camera encompasses the majority of the run. When a skier with a remote device **16** (*see* FIG. 5) skis within the FOV of camera **300**, the software digitally crops the full video and outputs a video file that contains a "zoomed-in" view of the skier as he or she skis down the mountain. Multiple subjects **A**, **B** and **C** may each carry their own remote devices **16** and the system can separately put out videos of each individual subject **A, B,** and **C** using corresponding areas **a**, **b** and **c** of the image sensor. The system keeps track of which video sections are associated with which specific remote device **16**. Such a system would be useful to a resort or sporting organization despite the extra expense of the high resolution image sensor and the required data storage and software capabilities. For example, at the end of a day of skiing, each user may collect a DVD or other media storage device with the cropped videos of their skiing that day. Alternatively, the videos may be uploaded to a server where each user may access their specific cropped video files. Because this described implementation records one wide angle shot and digitally crops sections of it based on the locations of the subjects within the view area, it is capable of producing cropped video recordings of multiple users who are simultaneously in different portions of the view area. If multiple skiers carrying remote devices **16** simultaneously ski through different portions of the view area of camera **300**, the system separately crops and stores the cropped video file of each user. In this implementation, cropping the video is performed post real time. By delaying the digital cropping process, the full path of each subject is known prior to cropping the video. By synchronizing timestamps of the subject's location data and the timestamps on the captured video, and by accounting for the lag time in the data collection, an accurate determination of the target's location within the camera FOV can be determined and the video can be cropped appropriately.

Upon reading the teachings of this specification, it is important to recognize that many components that are usually thought of as components of a camera (including video recording device) may not be built in the cameras of the future and that future cameras may be built such that they are incorporated in apparatuses that implement other functions than narrowly defined video recording, such additional functions may include, for example, editing video clips or uploading such clips to Internet servers.

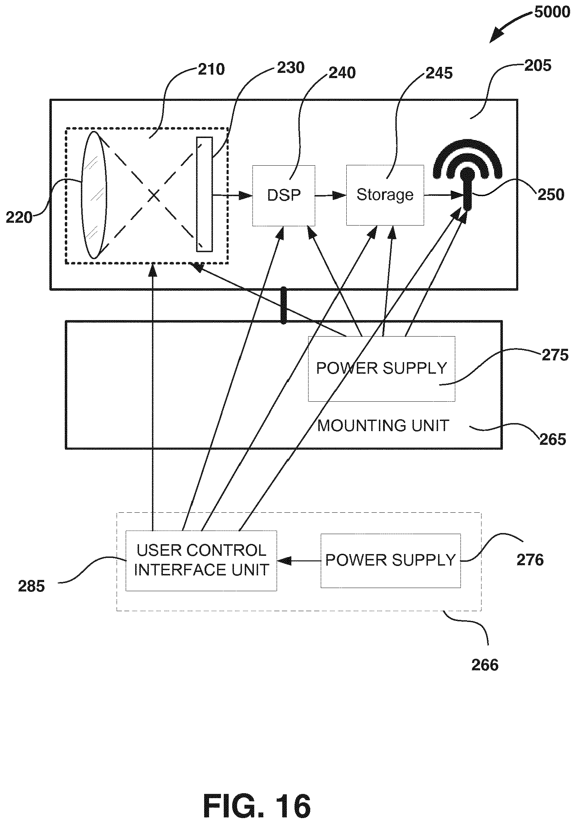

FIG. 16 shows a schematic diagram of the major components of yet another implementation of the inventive image capturing system. FIG. 16 illustrates an assembly of modular components forming image capturing device **5000**. In the implementation shown in FIG. 16, user control interface unit **285** and power supply **276** are separate from mounting unit **265**, as shown. Mounting unit **265**, is different from mounting unit **260** shown in FIGS. 1-3 in that it is no longer a passive device for mechanical support only. Those with skill in the art will now appreciate that user control interface unit **285**, having been separated from power supply **275** requires a power supply of its own, which is shown as power supply **276**. Units **285** and **276** may be separate or may be integrated into unit **266** which may, for example, be attached to the chest of user **600**. Since existence of unit **266** is optional, it is shown using dashed lines in FIG. 16.

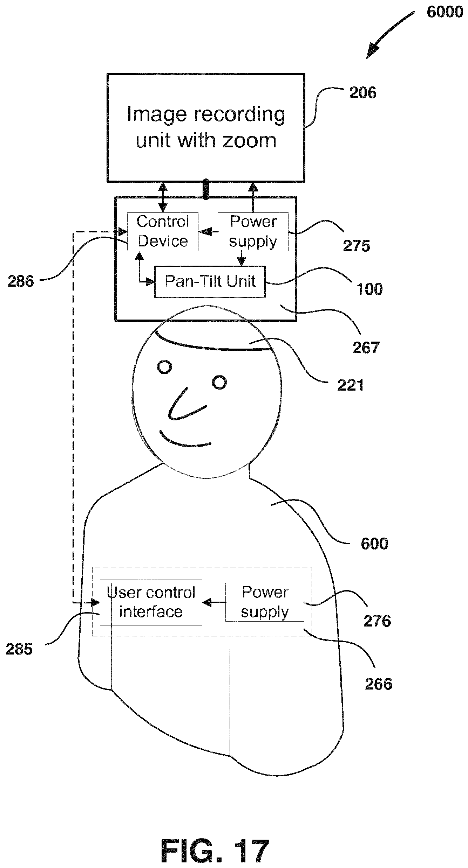

FIG. 17 shows a schematic diagram of the major components of still another implementation of the inventive image capturing system. FIG. 17 illustrates an assembly of modular components forming image capturing device **6000** assembled in part on helmet **221** of user **600**. In the implementation shown in FIG. 16, user control interface unit **285** and power supply **276** are separate from mounting unit **267**, as shown. Mounting unit **267**, is different from mounting unit **260** shown in FIGS. 1-3 in that it is no longer a passive device for mechanical support only. Those with skill in the art will now appreciate that user control interface unit **285**, having been separated from power supply **275** requires a power supply of its own, which is shown as power supply **276**. Units **285** and **276** may be separate or may be integrated into unit **266** which may be attached to the chest of user **600**, as shown. Since existence of unit **266** is optional, it is shown using dashed lines in FIG. 17. Image recording unit **206** may be a digital camera (at least embodying herein a digital camera module) according to an implementation of the present disclosure. Image recording unit **206** preferably has a zoom function. Pan-tilt unit **100** turns image recording unit **206** to follow a tag (not shown) in response to commands of control device **286**. In the implementation shown in FIG. 17, image capturing device **6000** is controlled by user **600** who enters commands into user control unit **285**, which in turn relates these commands to control device **286** and to image recording unit **206**. The commands may be transmitted using wired or wireless connections. The user receives status information via user control interface **285**. In FIG. 17, user control interface unit **285** communicates user input to control device **286**, as shown. According to an implementation hereof, user control interface unit **285** does not directly control image recording unit **206** (the digital camera module) and pan-tilt unit **100** (at least embodying herein an orienting device); the direct control is carried out by control device **286**, as shown.

According to an implementation hereof, image recording unit **206** may also comprises use controls. According to another implementation hereof, image recording unit **206**, pan-tilt unit **100**, and power supply **275**, may be integrated in a common housing. According to another implementation hereof, image recording unit **206**, pan-tilt unit **100**, orienting device, power supply **275**, and power supply module, and control device **286** may be integrated in a common housing. According to another implementation hereof, image recording unit **206**, pan-tilt unit **100**, and power supply **275** are integrated in a common housing with control device **286** and user control interface unit **285** housed individually. According to another implementation hereof, control device **286** may control a plurality of image capturing devices or automatic video recording systems. According to another implementation hereof, image recording unit **206**, pan-tilt unit **100**, and power supply **275** are housed or integrated in a common housing, and control device **286** and user control interface unit **285** are housed separately in a common housing.

According to this disclosure, there is provided an image capturing device for recording images of a subject or by a subject, comprising: an imaging unit, said imaging unit comprising optics, an image sensor, an image processor, and a storage device; said image capturing device further comprising a mounting support unit wherein said mounting support unit supports and orients said imaging unit but wherein said mounting support unit is housed separately from said imaging unit; a user control interface unit wherein said user control interface unit is connected to said imaging unit and controls said imaging unit but is housed separately from said imaging unit; one or more power supply units wherein at least one power supply unit provides power to said imaging unit but is housed separately from said imaging unit; and wherein at least one of said mounting support unit, said user control interface unit, and said power supply units are co-located with the subject when said image capturing device is used to record images. And, it provides such an image capturing device wherein said mounting support unit, user control interface unit, and power supply unit are housed together in a common housing. Further, there is provided such an image capturing device wherein said mounting support unit is co-located with the subject when said image capturing device is used to record images. And further, there is provided such an image capturing device wherein said mounting support unit and at least one power supply unit are housed together in a common housing and are co-located with the subject when said image capturing device is used to record images, and said user control interface unit is also co-located with the subject, when said image capturing device is used to record images, but is housed separately from said common housing comprising said mounting support unit and said at least one power supply unit. Even further, there is provided such an image capturing device wherein said mounting support unit is capable of automatically orienting said imaging unit at the subject and wherein the subject is co-located with said user control interface unit, when said image capturing device is used to record images. And, there is provided such an image capturing device wherein said optics comprises a fisheye lens. Further, there is provided such an image capturing device wherein said optics comprises a focusable lens system.

According to this disclosure, there is provided an automatic video recording system comprising: a digital camera module, an orienting device, a first power supply module, a second power supply module, a control device, and a user interface; wherein said digital camera module and said orienting device receive power from said first power supply module; wherein said control device controls said digital camera module and said orienting device; wherein said orienting device orients said digital camera module; and wherein said user interface communicates user input to said control device but does not directly control said digital camera module and said orienting device, and wherein said user interface is powered by said second power supply module. And, there is provided such an automatic video recording system wherein said digital camera module also comprises user controls. Further, there is provided such an automatic video recording system wherein said digital camera module, said orienting device, said first power supply module, and said control device are housed in a common housing. Further still, there is provided such an automatic video recording system wherein said digital camera module, said orienting device, and said first power supply module are housed in a common housing and wherein each said control device and said user interface are housed individually. Even further, there is provided such an automatic video recording system wherein said control device controls a plurality of automatic video recording systems. And yet further, there is provided such an automatic video recording system wherein said digital camera module, said orienting device, and said first power supply module are housed in a common housing and wherein said control device and said user interface are housed separately in a common housing.

According to this disclosure, there is provided a method of providing a user with image capturing and related components wherein the components are selected and arranged by a user to record a variety of activities, said method comprising: providing modular units that may be assembled in a variety of ways into an image capturing device, wherein each of said modular units, may have multiple variants, wherein said variants have common functions as modular units of said image capturing device, said modular units comprising a first modular component comprising an imaging unit, said imaging unit comprising optics, an image sensor, an image processor, and a data storage device having a storage capacity to store images captured by said image sensor and processed by said image processor; a second modular component comprising a mounting support that mechanically engages the image capturing device to support and orient the image capturing device; a third modular component, housed separately from said image capturing device and from all other modular components, comprising a user interface control unit and a power supply wherein the user interface control unit and power supply of the second modular component are in a common housing; a fourth modular component, housed separately from said image capturing device and from all other modular components, comprising a user interface control unit; a fifth modular component, housed separately from said image capturing device and from all other modular components, comprising at least one power supply; and a sixth modular component, housed separately from said image capturing device and from all other modular components, comprising a mounting support, a user control interface, and a power supply in a common housing; permitting a user to select, based on the user-desired activity to be recorded, from said modular components to interface with said imaging unit to provide user-desired optics, user control, mounting, and power suitable for the activity to be recorded. And, there is provided such a method wherein additional modular power supply components are provided. Further, there is provided such a method wherein the capacity of the storage device may be selected according to the activity to be recorded. And yet further, there is provided such a method wherein the capacity size of the power supply may be selected according to the activity to be recorded. Even further, there is provided such a method according wherein said imaging unit is mountable on the user.

Different implementations, methods, applications, advantages, and features have been described above; however, these particular implementations, methods, applications, advantages, and features should not be construed as being the only ones that constitute the practice of the invention. Indeed, it is understood that the broadest scope of this invention includes modifications. Further, many other applications and advantages of applicant's invention will be apparent to those skilled in the art from the above descriptions and the below claims.

**Claims**

1. An image capturing device for recording images of a subject or by a subject, comprising:

    an imaging unit, said imaging unit comprising optics, an image sensor, an image processor, and a storage device;
    said image capturing device further comprising a mounting support unit wherein said mounting support unit supports and orients said imaging unit but wherein said mounting support unit is housed separately from said imaging unit;
    a user control interface unit wherein said user control interface unit is connected to said imaging unit and controls said imaging unit but is housed separately from said imaging unit;
    one or more power supply units wherein at least one power supply unit provides power to said imaging unit but is housed separately from said imaging unit; and
    wherein at least one of said mounting support unit, said user control interface unit, and said power supply units are co-located with the subject when said image capturing device is used to record images.

2. The image capturing device of claim 1, wherein said mounting support unit, user control interface unit, and power supply unit are housed together in a common housing.

3. The image capturing device of claim 1 or 2, wherein said mounting support unit is co-located with the subject when said image capturing device is used to record images.

4. The image capturing device of any one of the preceding claims, wherein said mounting support unit and at least one power supply unit are housed together in a common housing and are co-located with the subject when said image capturing device is used to record images, and said user control interface unit is also co-located with the subject, when said image capturing device is used to record images, but is housed separately from said common housing comprising said mounting support unit and said at least one power supply unit.

5. The image capturing device of any one of the preceding claims, wherein said mounting support unit is capable of automatically orienting said imaging unit at the subject and wherein the subject is co-located with said user control interface unit, when said image capturing device is used to record images.

6. The image capturing device of any one of the preceding claims, wherein said optics comprises a fisheye lens.

7. The image capturing device of any one of the preceding claims, wherein said optics comprises a focusable lens system.

8. A method of providing a user with an image capturing device and related components wherein the components are selected and arranged by a user to record a variety of activities including recording images of a subject or by a subject, said method comprising:

    providing an imaging unit, said imaging unit comprising optics, an image sensor, an image processor, and a storage device;
    providing a mounting support unit that supports and orients said imaging unit but is housed separately from said imaging unit;
    providing a user control interface unit that is connected to said imaging unit and controls said imaging unit but is housed separately from said imaging unit;
    providing one or more power supply units wherein at least one of said power supply unit is configured to provide power to said imaging unit but is housed separately from said imaging unit; and
    wherein at least one of said mounting support unit, said user control interface unit, and said power supply units are configured to be co-located with the subject when said image capturing device is used to record images.

9. The method according to claim 8, further comprising a step of providing a selection of storage devices with capacities selectable according to an activity to be recorded.

10. The method according to claim 8 or 9, further comprising a step of providing a selection of power supplies with capacity sizes selectable according to an activity to be recorded.

**11.** The method according to any one of claims 8 to 10, further comprising a step of providing said imaging unit is in a configuration making it mountable on the user.

**12.** The method according to any one of claims 8 to 11, further comprising a step of providing a common housing for said mounting support unit, user control interface unit, and power supply unit.

**13.** The method according to any one of claims 8 to 12, further comprising a step of providing a mounting support unit configured to automatically orient said imaging unit at the subject.

**14.** The method according to any one of claims 8 to 13, further comprising a step of providing common housing for said mounting support unit and at least one power supply unit wherein said common housing is configured to be co-located with the subject when said image capturing device is used to record images.

**15.** The method according to claim 14, further comprising a step of providing said user control interface unit configured to be co-located with the subject when said image capturing device is used to record images but being housed separately from said common housing comprising said mounting support unit and said at least one power supply unit.

**FIG. 1**

FIG. 2

FIG. 3

FIG. 4

**FIG. 5**

FIG. 6

FIG. 7

Camera
focus, zoom
**46**

115

10

Positioner
**32**

Base Station
**18**

Remote
Device
**16**

# FIG. 8

10

Camera
interface
**287**

Camera
focus, zoom
**46**

120

Positioner
**32**

Base Station
**18**

Remote
Device
**16**

# FIG. 9

Camera focus, zoom
46

125

10

Tilt Positioner
33

Base Station
19

Pan Positioner
31

130

Base Station
18

Remote Device
16

FIG. 10

28

**FIG. 11**

**FIG. 12**

**FIG. 13**

Wait for updated location of remote device — 500

Location updated? — 510

No

Yes

Calculate updated angles and distance — 520

Outside deadband? — 530

No

Yes

540 — Calculate target angles

550 — Correct for backlash

560 — Calculate effective drive voltages

570 — Output commands $v, w$ and $\varphi, \theta$

580 — Calculate new zoom and focus

590 — Output commands $\alpha$ and $d$

# FIG. 14

**FIG. 15**

**FIG. 16**

6000

Image recording unit with zoom — 206

Control Device    Power supply — 275

286

Pan-Tilt Unit — 100

267

221

600

User control interface    Power supply — 276

285

266

**FIG. 17**

Europäisches
Patentamt

European
Patent Office

Office européen
des brevets

# EUROPEAN SEARCH REPORT

Application Number

EP 17 17 8879

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/119734 A1 (NEEL JOHN C [US]) 8 June 2006 (2006-06-08) * paragraphs [0048], [0051], [0060], [0061]; figures 1, 3 * | 1-3,5-13 | INV. H04N5/225 H04N5/232 G03B17/02 H04N5/247 |
| X | US 2007/071436 A1 (MAYUZUMI ICHIKO [JP]) 29 March 2007 (2007-03-29) * paragraphs [0029], [0030]; figures 1, 2 * | 1,3-11, 13-15 | |
| X | US 2014/160250 A1 (POMERANTZ ITZHAK [IL] ET AL) 12 June 2014 (2014-06-12) * paragraphs [0136] - [0138], [0224]; figures 30, 31 * | 1,3,4,8, 11,14,15 | |
| X | US 2007/201847 A1 (LEI TIANMO [US]) 30 August 2007 (2007-08-30) * paragraphs [0016] - [0018], [0021]; figures 1a-1c, 4a-4c * | 1,5,8, 11,13 | |
| X | WO 2007/128317 A1 (STOBBE TECH AS [DK]; STOBBE PER [DK]) 15 November 2007 (2007-11-15) * page 18, line 27 - page 20, line 2; figures 1, 2 * | 1,5,8,13 | TECHNICAL FIELDS SEARCHED (IPC) H04N G03B G08B F16M |
| X | WO 2006/029148 A1 (EASTMAN KODAK CO [US]; MANICO JOSEPH ANTHONY [US]; FREDLUND JOHN RANDA) 16 March 2006 (2006-03-16) * figures 1, 4-6, 10, 11 * | 1,2,5,8, 13 | G02B |
| X | US 2003/117499 A1 (BIANCHI MARK J [US] ET AL) 26 June 2003 (2003-06-26) * figures 1, 2, 4 * | 1,4,8, 14,15 | |

The present search report has been drawn up for all claims

| Place of search | Date of completion of the search | Examiner |
|---|---|---|
| Munich | 7 August 2017 | Oelsner, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 17 8879

This annex lists the patent family members relating to the patent documents cited in the above-mentioned European search report.
The members are as contained in the European Patent Office EDP file on
The European Patent Office is in no way liable for these particulars which are merely given for the purpose of information.

07-08-2017

| Patent document cited in search report | | Publication date | Patent family member(s) | | Publication date |
|---|---|---|---|---|---|
| US 2006119734 | A1 | 08-06-2006 | NONE | | |
| US 2007071436 | A1 | 29-03-2007 | CN | 1933556 A | 21-03-2007 |
| | | | JP | 4958420 B2 | 20-06-2012 |
| | | | JP | 2007081888 A | 29-03-2007 |
| | | | US | 2007071436 A1 | 29-03-2007 |
| | | | US | 2009153687 A1 | 18-06-2009 |
| US 2014160250 | A1 | 12-06-2014 | NONE | | |
| US 2007201847 | A1 | 30-08-2007 | NONE | | |
| WO 2007128317 | A1 | 15-11-2007 | NONE | | |
| WO 2006029148 | A1 | 16-03-2006 | CN | 101044748 A | 26-09-2007 |
| | | | EP | 1787461 A1 | 23-05-2007 |
| | | | JP | 2008512902 A | 24-04-2008 |
| | | | US | 7656439 B1 | 02-02-2010 |
| | | | WO | 2006029148 A1 | 16-03-2006 |
| US 2003117499 | A1 | 26-06-2003 | JP | 2003244517 A | 29-08-2003 |
| | | | US | 2003117499 A1 | 26-06-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8704904 B
- US 72622212 A
- US 72635512 A
- US 72645112 A
- US 72638012 A
- US 22380314 A